# FASCICULE DE BREVET EUROPEEN

(11) **EP 0 974 253 B1**
(45) Date de publication et mention de la délivrance du brevet: **24.09.2003**
(21) Numéro de dépôt: 99440188.3
(22) Date de dépôt: 09.07.1999
(51) Int. Cl.: A01C 7/20

(54) **Semoir**
Sämaschine
Seeddrill

(30) Priorité: 20.07.1998 FR 9809336
(43) Date de publication de la demande: 26.01.2000
(73) Titulaire: Kuhn-Nodet S.A., 77876 Montereau (FR)
(72) Inventeur: Constant, Olivier, 77130 Misy sur Yonne (FR)
(74) Mandataire: Andres, Jean-Claude

(56) Documents cités:
- DE-C- 30 082
- DE-C- 826 523
- DE-U- 29 701 531

## Description

La présente invention concerne un semoir selon le préambule de la revendication 1.

Il est connu de DE 29 701 531 U un tel semoir appelé communément semoir mécanique. Ce semoir connu comporte un châssis, une trémie destinée à contenir la semence, des éléments d'implantation de la semence dans le sol, un dispositif de dosage et un dispositif d'acheminement destiné à acheminer la semence du dispositif de dosage vers les éléments d'implantation. Chaque élément d'implantation de la semence dans le sol est lié au châssis au moyen d'une articulation d'axe longitudinal orthogonal à la direction d'avance au travail et sensiblement horizontal, de manière à permettre audit élément d'implantation de se déplacer vers le haut et vers le bas pour suivre les dénivellations du sol et assurer une bonne implantation de la semence dans le sol.

Le dispositif de dosage est situé sous la trémie et le dispositif d'acheminement comporte des éléments de guidage rigides permettant d'acheminer la semence dosée vers les éléments d'implantation. Chaque élément de guidage rigide est télescopique et s'étend, à partir du dispositif de dosage, vers l'arrière et vers le bas jusqu'à l'élément d'implantation correspondant. Pour réduire le porte-à-faux de ce semoir connu, notamment lorsqu'il est attelé à une machine de travail du sol, la trémie de ce dernier est située en avant de manière à s'étendre sensiblement au-dessus de ladite machine de travail du sol. A cet effet, les éléments de guidage doivent être d'une grande longueur, ce qui impose donc des éléments de guidage relativement imposants et lourds. En sus, pour permettre à l'opérateur d'accéder à la trémie, notamment pour le remplissage de celle-ci, il est prévu une plate-forme s'étendant derrière ladite trémie. En outre, ladite plate-forme s'étend en retrait par rapport aux éléments de guidage, de manière à éviter une interférence entre ladite plate-forme et lesdits éléments de guidage lorsque ces derniers se déplacent suite au suivi, par les éléments d'implantation, des dénivellations du sol. Cette plate-forme est donc située relativement en arrière ce qui augmente le porte-à-faux du semoir, et assez loin de la trémie ce qui ne facilite pas le remplissage et l'accès de celle-ci.

Le but de la présente invention est de remédier aux inconvénients susdits tout en assurant un bon fonctionnement du semoir et à un moindre coût.

A cet effet, le semoir selon la présente invention est caractérisé selon la revendication 1.

L'invention concerne également les caractéristiques suivantes considérées isolément ou dans toutes leurs combinaisons techniquement possibles :
- l'articulation permettant un mouvement relatif entre la première partie de guidage et la deuxième partie de guidage est une articulation du type rotule ;
- la première partie de guidage et la deuxième partie de guidage sont liées l'une à l'autre au moyen de ladite articulation ;
- la première partie de guidage est liée au châssis d'une part à son extrémité supérieure au moyen d'une première liaison et d'autre part à son extrémité inférieure au moyen d'une deuxième liaison ;
- la deuxième liaison liant l'extrémité inférieure de la première partie de guidage au châssis comporte un élément de maintien qui autorise un escamotage de ladite première partie de guidage pour faciliter l'accès au dispositif de dosage ;
- il est prévu une plate-forme destinée à faciliter à l'opérateur l'accès à la trémie, ladite plate-forme étant située en arrière par rapport à la trémie et plus bas que celle-ci, la liaison liant l'extrémité inférieure de la première partie de guidage au châssis étant, quant à elle, située, selon une vue de côté, quelque peu plus bas que ladite plate-forme;
- l'extrémité supérieure de la première partie de guidage est en forme d'entonnoir ce qui permet de mieux canaliser la semence en provenance du dispositif de dosage ;
- l'extrémité inférieure de la première partie de guidage comporte une première forme sphérique située dans le proche voisinage de la deuxième liaison liant l'extrémité inférieure de ladite première partie de guidage au châssis ;
- l'extrémité supérieure de la deuxième partie de guidage comporte une deuxième forme sphérique qui est complémentaire à la première forme sphérique ;
- la première forme sphérique et la deuxième forme sphérique forment l'articulation entre la première partie de guidage et la deuxième partie de guidage;
- la deuxième partie de guidage comporte une pluralité de tubes rigides engagés les uns dans les autres de manière télescopique et dans lesquels est destinée à circuler la semence ;
- la première partie de guidage comporte un tube rigide dans lequel est destinée à circuler la semence.

D'autres objets et caractéristiques de l'invention ressortiront de la description ci-après avec référence aux dessins annexés qui représentent, à titre d'exemple non limitatif, une forme de réalisation du semoir selon l'invention.

Sur ces dessins
- la figure 1 représente une vue de côté d'un semoir selon l'invention, sur laquelle ont été effectuées quelques coupes partielles ;
- la figure 2 représente, à une autre échelle, une partie du semoir de la figure 1 selon une vue de côté, sur laquelle ont été effectuées quelques coupes partielles.

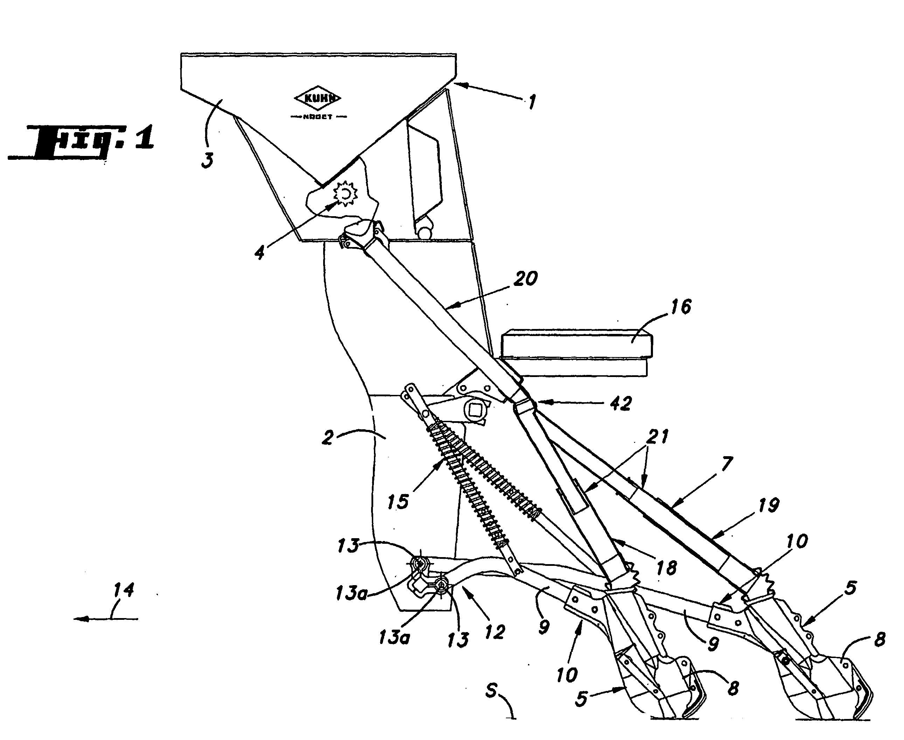

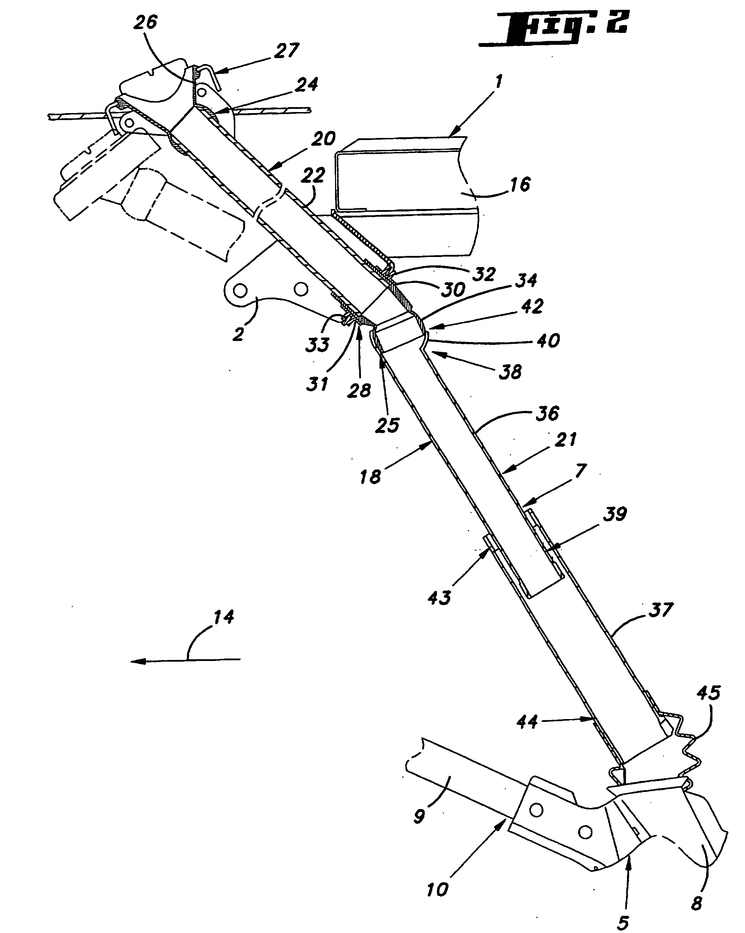

A la lumière des figures 1 et 2, on voit un semoir (1) selon la présente invention. Ce semoir (1) est destiné à être attelé à un véhicule moteur (non représenté) ou à une machine de travail du sol (non représentée).

Ce semoir (1) comporte, dans les grandes lignes, un châssis (2), une trémie (3) fixée audit châssis (2) et destinée à contenir la semence à implanter dans le sol (S), un dispositif de dosage (4) situé sous ladite trémie (3) et destiné à doser la semence, des éléments d'implantation (5) destinés à implanter la semence dans le sol (S) et un dispositif d'acheminement (7) destiné à acheminer la semence du dispositif de dosage (4) vers les éléments d'implantation (5).

Les éléments d'implantation (5) de la semence dans le sol (S) comportent chacun un soc (8) et un bras de liaison (9). Chaque bras de liaison (9) comporte d'une part une extrémité arrière (10) à laquelle est fixé un soc (8) correspondant et d'autre part une extrémité avant (12) qui est liée au châssis (2) au moyen d'une première articulation (13) d'axe longitudinal (13a) sensiblement horizontal et orthogonal à la direction d'avance (14). De cette manière, lesdits socs (8) peuvent pivoter autour de l'axe longitudinal (13a) de l'articulation (13) correspondante, ce qui permet avantageusement auxdits socs (8) de suivre les inégalités du sol (S) et d'implanter la semence dans le sol (S) à une profondeur sensiblement constante.

Selon l'exemple de réalisation représenté, on remarquera que les socs (8) sont disposés suivant deux rangées s'étendant sensiblement orthogonalement à la direction d'avance (14) et l'une derrière l'autre. On notera encore que les éléments d'implantation (5) sont répartis sensiblement régulièrement sur toute la largeur du semoir (1) et que la trémie (3) s'étend sur sensiblement toute la largeur dudit semoir (1).

A la lumière de la figure 1, on voit en sus qu'il est prévu un dispositif de terrage (15) destiné à exercer sur les bras de liaison (9) une force dirigée vers le sol (S) de manière à assister la pénétration des socs (8) dans le sol (S) et assurer une bonne implantation de la semence dans le sol (S).

A la lumière de la figure 1, on voit encore que le semoir (1) est équipé d'une plate-forme (16) s'étendant sur toute la largeur dudit semoir, sensiblement horizontalement et parallèlement à la trémie (3) et à l'arrière de celle-ci. Cette plate-forme (16) est en outre située plus bas que la trémie (2) et permet de faciliter à l'opérateur l'accès à ladite trémie (3).

Le dispositif d'acheminement (7), destiné à acheminer la semence du dispositif de dosage (4) vers les éléments d'implantation (5), comporte des éléments de guidage (18, 19).

Chaque élément de guidage (18, 19) comporte une première partie de guidage (20) rigide et une deuxième partie de guidage (21) rigide.

A la lumière de la figure 2, on voit que la première partie de guidage (20) comporte un premier tube cylindrique (22) rigide dans lequel est destinée à circuler par gravité la semence en provenance du dispositif de dosage (4). A cet effet, la première partie de guidage (20) s'étend vers l'arrière et vers le bas en direction de l'élément d'implantation (5) correspondant.

La première partie de guidage (20), ou plus précisément le premier tube cylindrique (22) de celle-ci, comporte une extrémité supérieure (24) et une extrémité inférieure (25). L'extrémité supérieure (24) est en forme d'entonnoir (26) et est liée au châssis (2) au moyen d'une première liaison (27) alors qu'aux alentours de l'extrémité inférieure (25), la première partie de guidage (20) est liée audit châssis (2) au moyen d'une deuxième liaison (28).

La première liaison (27) est une liaison rapide qui permet de délier rapidement l'extrémité supérieure (24) du châssis (2). Cette première liaison (27) est bien connue de l'homme du métier et ne sera, par conséquent, pas décrite davantage. On remarquera à la lumière de la figure 2, que la première partie de guidage (20) est représentée en traits mixtes dans la position escamotée.

La deuxième liaison (28) autorise quant à elle un escamotage de la première partie de guidage (20). A cet effet, on voit à la lumière de la figure 2, que l'extrémité inférieure (25) de la première partie de guidage (20) s'étend au travers d'un élément de maintien (30) en matière souple lequel s'étend lui-même au travers d'un trou (31) respectif prévu dans le châssis (2). Cet élément de maintien (30) est fixé dans le trou (31) correspondant au moyen de deux lèvres (32, 33) s'étendant, selon l'exemple de réalisation représenté, de part et d'autre du trou (31).

La deuxième liaison (28) est située, selon une vue de côté, plus bas que la plate-forme (16) et en dessous de celle-ci.

On remarquera encore que l'extrémité inférieure (25) de la première partie de guidage (20) comporte une première forme sphérique (34) située dans le proche voisinage de la deuxième liaison (28). Plus précisément, la deuxième liaison (28) est située entre les deux extrémités (24, 25) de la première partie de guidage (20) et la première forme sphérique (34) est située, selon une vue de côté, quelque peu en dessous de la plate-forme (16).

La deuxième partie de guidage (21) représentée sur la figure 2 comporte, quant à elle, une pluralité de tubes cylindriques (36, 37) rigides engagés les uns dans les autres de manière télescopique et dans lesquels est destinée à circuler par gravité la semence en provenance de la première partie de guidage (20) vers l'arrière et vers le bas en direction de l'élément d'implantation (5) correspondant. A la lumière de la figure 2, on voit encore que la deuxième partie de guidage (21) comporte un deuxième tube cylindrique (36) et un troisième tube cylindrique (37). Le deuxième tube cylindrique (36) comporte une extrémité supérieure (38) et une extrémité inférieure (39). L'extrémité supérieure (38) du deuxième tube (36) comporte une deuxième forme sphérique (40) qui est complémentaire à la première forme sphérique (34). La première forme sphérique (34) et la deuxième forme sphérique (40) forment une articulation (42) permettant un mouvement relatif entre la première partie de guidage (20) et la deuxième partie de guidage (21) suivant les trois axes de rotation d'un repère orthogonal.

Cette articulation (42) est, selon l'exemple de réalisation représenté, une articulation (42) du type rotule. Cette articulation (42), du type rotule, est formée par la première forme sphérique (34) et la deuxième forme sphérique (40). Elle lie l'extrémité supérieure (38) du deuxième tube cylindrique (36) à l'extrémité inférieure (25) du premier tube cylindrique (22). En d'autres termes, la première partie de guidage (20) et la deuxième partie de guidage (21) sont liées entre elles au moyen de la l'articulation (42) du type rotule.

Le deuxième tube cylindrique (36) est diamétralement plus petit que le troisième tube cylindrique (37). A cet effet, on voit à la lumière de la figure 2, que le troisième tube cylindrique (37) comporte une extrémité supérieure (43) et une extrémité inférieure (44), et que l'extrémité inférieure (39) du deuxième tube cylindrique (36) s'étend à l'intérieur de ladite extrémité supérieure (43) dudit troisième tube cylindrique (37) ce qui favorise le passage de la semence dudit deuxième tube cylindrique (36) vers ledit troisième tube cylindrique (37).

Ainsi, lorsque le soc (8) correspondant suit les inégalités du sol (S) et se déplace vers le haut et vers le bas lors du travail, le deuxième tube cylindrique (36) coulisse dans le troisième tube cylindrique (37) de manière à toujours assurer le passage de la semence dudit deuxième tube cylindrique (36) vers ledit troisième tube cylindrique (37).

L'extrémité inférieure (44) du troisième tube cylindrique (37) est liée au soc (8) correspondant au moyen d'un soufflet (45) en matière souple fixé d'une part sur la paroi extérieure de l'extrémité inférieure (44) dudit troisième tube cylindrique (37) et d'autre part audit soc (8). Ce soufflet (45) permet d'assurer un bon acheminement de la semence du troisième tube cylindrique (37) vers le soc (8) correspondant.

Finalement, diverses modifications peuvent être apportées à l'exemple qui vient d'être décrit, notamment en ce qui concerne la constitution des divers éléments ou par substitution d'équivalents techniques, sans pour autant sortir du domaine de protection défini dans les revendications ci-après.

C'est ainsi qu'il est parfaitement possible de concevoir un semoir dans lequel les socs (8) sont disposés suivant trois rangées ou plus, s'étendant sensiblement orthogonalement à la direction d'avance (14) et l'une derrière l'autre.

Il est également possible de concevoir un semoir comportant une première partie de guidage et une deuxième partie de guidage liées entre elles au moyen d'une articulation du type pivot d'axe longitudinal sensiblement horizontal et sensiblement orthogonal à la direction d'avance (14), l'extrémité supérieure du deuxième tube cylindrique comportant alors une forme d'entonnoir au-dessus de laquelle s'étend l'extrémité inférieure du premier tube cylindrique de sorte à assurer un bon passage de la semence de la première partie de guidage vers la deuxième partie de guidage.

Il est encore parfaitement possible de prévoir trois tubes cylindriques rigides ou plus par partie de guidage comme cela est représenté sur la figure 1 pour l'élément de guidage (19).

## Revendications

1. Semoir comportant
- un châssis (2);
- une trémie (3) destinée à contenir la semence ;
- un dispositif de dosage (4) destiné à doser la semence ;
- des éléments d'implantation (5) de la semence dans le sol (S) liés chacun au châssis (2) au moyen d'une articulation (13) d'axe longitudinal (13a) transversal à la direction d'avance au travail (14);
- un dispositif d'acheminement (7) destiné à acheminer la semence du dispositif de dosage (4) vers les éléments d'implantation (5) et comportant des éléments de guidage (18, 19);
- chaque élément de guidage (18, 19) comportant une première partie de guidage (20) rigide et une deuxième partie de guidage (21) rigide ;
- une articulation (42) entre ces parties de guidage (20, 21) permettant un mouvement relatif entre ladite première partie de guidage (20) et ladite deuxième partie de guidage (21) suivant au moins un axe sensiblement parallèle à l'axe longitudinal (13a) de l'articulation (13) liant l'élément d'implantation (5) correspondant au châssis (2) ;
***caractérisé en ce:***
- **que** la première partie de guidage (20) est liée au châssis (2) d'une part à son extrémité supérieure au moyen d'une première liaison (27) et d'autre part à son extrémité inférieure au moyen d'une deuxième liaison (28); et
- **que** la deuxième liaison (28) liant l'extrémité inférieure de la première partie de guidage (20) au châssis (2) comporte un élément de maintien (30) qui autorise un escamotage de ladite première partie de guidage (20).

2. Semoir selon la revendication 1, ***caractérisé en ce* que** la première partie de guidage (20) et la deuxième partie de guidage (21) sont liées l'une à l'autre au moyen de l'articulation (42).

3. Semoir selon la revendication 1 ou *2,* ***caractérisé en ce* que** l'articulation (42) permettant un mouvement relatif entre la première partie de guidage (20) et la deuxième partie de guidage (21) est une articulation du type rotule.

4. Semoir selon la revendication 1, ***caractérisé en ce* qu'**il est prévu une plate-forme (16) destinée à faciliter à l'opérateur l'accès à la trémie (3), ladite plate-forme (16) étant située en arrière par rapport à la trémie (3) et plus bas que celle-ci, la liaison (28) liant l'extrémité inférieure de la première partie de guidage (20) au châssis (2) étant, quant à elle, située, selon une vue de côté, quelque peu plus bas que ladite plate-forme (16).

5. Semoir selon l'une quelconque des revendications 1 à 4, ***caractérisé en ce* que** l'extrémité supérieure de la première partie de guidage (20) est en forme d'entonnoir (26).

6. Semoir selon l'une quelconque des revendications 1 à 5, ***caractérisé en ce* que** l'extrémité inférieure de la première partie de guidage (20) comporte une première forme sphérique (34) située dans le proche voisinage de la deuxième liaison (28) liant l'extrémité inférieure de ladite première partie de guidage (20) au châssis (2).

7. Semoir selon la revendication 6, ***caractérisé en ce* que** l'extrémité supérieure de la deuxième partie de guidage (21) comporte une deuxième forme sphérique (40) qui est complémentaire à la première forme sphérique (34).

8. Semoir selon les revendications 6 et 7, ***caractérisé en ce* que** la première forme sphérique (34) et la deuxième forme sphérique (40) forment l'articulation (42) entre la première partie de guidage (20) et la deuxième partie de guidage (21).

9. Semoir selon l'une quelconque des revendications 1 à 8, ***caractérisé en ce* que** la deuxième partie de guidage (21) comporte une pluralité de tubes (36, 37) rigides engagés les uns dans les autres de manière télescopique et dans lesquels est destinée à circuler la semence.

10. Semoir selon l'une quelconque des revendications 1 à 9, ***caractérisé en ce* que** la première partie de guidage (20) comporte un tube (22) rigide dans lequel est destinée à circuler la semence.

## Patentansprüche

1. Sämaschine, die
- einen Rahmen (2);
- einen Kasten (3) zur Aufnahme des Saatguts;
- eine Dosiervorrichtung (4) zur Dosierung des Saatguts;
- Elemente (5) zum Einbringen von Saatgut in den Boden (S), die jeweils mittels eines Gelenks (13) mit einer quer zur Arbeitsvorschubrichtung (14) verlaufenden Längsachse (13a) mit dem Rahmen (2) verbunden sind;
- eine Zuführvorrichtung (7) zur Zuführung des Saatguts von der Dosiervorrichtung (4) zu den Einbringelementen (5), die Führungselemente (18, 19) aufweist;
umfasst,
- wobei jedes Führungselement (18, 19) einen starren ersten Führungsteil (20) und einen starren zweiten Führungsteil (21) enthält;
- wobei ein Gelenk (42) zwischen diesen Führungsteilen (20, 21) eine Relativbewegung zwischen dem ersten Führungsteil (20) und dem zweiten Führungsteil (21) entlang einer zumindest im Wesentlichen parallel zur Längsachse (13a) des das entsprechende Einbringelement (5) mit dem Rahmen (2) verbindenden Gelenks (13) verlaufenden Achse gestattet;
***dadurch gekennzeichnet,***
- **dass** der erste Führungsteil (20) einerseits an seinem oberen Ende mittels einer ersten Verbindung (27) und andererseits an seinem unteren Ende mittels einer zweiten Verbindung (28) mit dem Rahmen (2) verbunden ist; und
- **dass** die das untere Ende des ersten Führungsteils (20) mit dem Rahmen (2) verbindende zweite Verbindung (28) ein Haltelement (30), das ein Einziehen des ersten Führungsteils (20) gestattet, enthält.

2. Sämaschine nach Anspruch 1, ***dadurch gekennzeichnet,* dass** der erste Führungsteil (20) und der zweite Führungsteil (21) mittels des Gelenks (42) miteinander verbunden sind.

3. Sämaschine nach Anspruch 1 oder 2, ***dadurch gekennzeichnet,* dass** das Gelenk (42), das eine Relativbewegung zwischen dem ersten Führungsteil (20) und dem zweiten Führungsteil (21) gestattet, ein Kugelgelenk ist.

4. Sämaschine nach Anspruch 1, ***dadurch gekennzeichnet,* dass** eine Plattform (16) vorgesehen ist, die dem Bediener den Zugang zum Kasten (3) erleichtern soll, wobei sich die Plattform (16) bezüglich des Kastens (3) rückwärtig und weiter unten als dieser befindet, wobei sich die das untere Ende des ersten Führungsteils (20) mit dem Rahmen (2) verbindende Verbindung (28) ihrerseits in Seitenansicht etwas weiter unten als die Plattform (16) befindet.

5. Sämaschine nach irgend einem der Ansprüche 1 bis 4, ***dadurch gekennzeichnet,* dass** das obere Ende des ersten Führungsteils (20) in Form eines Trichters (26) ausgebildet ist.

6. Sämaschine nach irgend einem der Ansprüche 1 bis *5,* ***dadurch gekennzeichnet,* dass** das untere Ende des ersten Führungsteils (20) eine erste Kugelform (34) aufweist, die sich in unmittelbarer Nähe der das untere Ende des ersten Führungsteils (20) mit dem Rahmen (2) verbindenden zweiten Verbindung (28) befindet.

7. Sämaschine nach Anspruch 6, ***dadurch gekennzeichnet,* dass** das obere Ende des zweiten Führungsteils (21) eine zweite Kugelform (40) aufweist, die zu der ersten Kugelform (34) komplementär ist.

8. Sämaschine nach den Ansprüchen 6 und 7, ***dadurch gekennzeichnet,* dass** die erste Kugelform (34) und die zweite Kugelform (40) das Gelenk (42) zwischen dem ersten Führungsteil (20) und dem zweiten Führungsteil (21) bilden.

9. Sämaschine nach irgend einem der Ansprüche 1 bis *8,* ***dadurch gekennzeichnet,* dass** der zweite Führungsteil (21) eine Vielzahl von starren Rohren (36, 37) aufweist, die teleskopisch ineinander eingreifen und in denen das Saatgut durchfliessen soll.

10. Sämaschine nach irgend einem der Ansprüche 1 bis 9, ***dadurch gekennzeichnet,* dass** der erste Führungsteil (20) ein starres Rohr (22) aufweist, in dem das Saatgut durchfliessen soll.

## Claims

1. Seed drill comprising
- a chassis (2);
- a hopper (3) intended to contain the seed;
- a metering device (4) intended to meter the seed;
- elements (5) for planting the seed in the ground (S), each connected to the chassis (2) by means of an articulation (13) the longitudinal axis (13a) of which is transversal to the direction of forward travel during work (14);
- a conveying device (7) intended to convey the seed from the metering device (4) to the planting elements (5) and comprising guide elements (18, 19);
- each guide element (18, 19) comprising a rigid first guide part (20) and a rigid second guide part (21);
- an articulation (42) between these guide parts (20, 21) allowing relative movement between the said first guide part (20) and the said second guide part (21) about at least one axis substantially parallel to the longitudinal axis (13a) of the articulation (13) connecting the corresponding planting element (5) to the chassis (2);
***characterized in* that**:
- the first guide part (20) is connected to the chassis (2) on the one hand at its upper end by means of a first connection (27) and, on the other hand, at its lower end, by means of a second connection (28); and
- the second connection (28) connecting the lower end of the first guide part (20) to the chassis (2) has a holding element (30) which allows the said first guide part (20) to retract.

2. Seed drill according to Claim 1, ***characterized in* that** the first guide part (20) and the second guide part (21) are connected together by means of the articulation (42).

3. Seed drill according to Claim 1 or 2, ***characterized in* that** the articulation (42) allowing relative movement between the first guide part (20) and the second guide part (21) is an articulation of the ball joint type.

4. Seed drill according to Claim 1, ***characterized in* that** a platform (16) is provided to make it easier for the operator to access the hopper (3), the said platform (16) being situated backward with regard to the hopper (3) and lower down than the latter, the connection (28) connecting the lower end of the first guide part (20) to the chassis (2) for its part being situated, when viewed from the side, a little lower down than the said platform (16).

5. Seed drill according to any one of Claims 1 to 4, ***characterized in* that** the upper end of the first guide part (20) is in the shape of a funnel (26).

6. Seed drill according to any one of Claims 1 to *5,* ***characterized in* that** the lower end of the first guide part (20) comprises a first spherical shape (34) situated in close proximity to the second connection (28) connecting the lower end of the said first guide part (20) to the chassis (2).

7. Seed drill according to Claim 6, ***characterized in* that** the upper end of the second guide part (21) comprises a second spherical shape (40) which complements the first spherical shape (34).

8. Seed drill according to Claims 6 and 7, ***characterized in* that** the first spherical shape (34) and the second spherical shape (40) form the articulation (42) between the first guide part (20) and the second guide part (21).

9. Seed drill according to any one of Claims 1 to *8,* ***characterized in* that the** second guide part (21) comprises a multiplicity of rigid tubes (36, 37) engaged telescopically in one another and through which the seed is intended to travel.

10. Seed drill according to any one of Claims 1 to 9, ***characterized in* that** the first guide part (20) comprises a rigid tube (22) in which the seed is intended to travel.
